# NEUE EUROPÄISCHE PATENTSCHRIFT

(11) **EP 0 750 546 B2**
(45) Veröffentlichungstag und Bekanntmachung des Hinweises auf die Entscheidung über den Einspruch: **31.07.2002**
(45) Hinweis auf die Patenterteilung: 15.07.1998
(21) Anmeldenummer: 95913017.0
(22) Anmeldetag: 15.03.1995
(51) Int. Cl.: B29C 65/50, B29C 65/02

(54) **VERFAHREN ZUM VERBINDEN VON PROFILEN AUS ELASTOMEREM WERKSTOFF**
PROCESS FOR JOINING SECTIONS MADE OF ELASTOMER MATERIALS
PROCEDE DE JONCTION DE PROFILES EN MATERIAUX ELASTOMERES

(30) Priorität: 18.03.1994 DE 4409293
(43) Veröffentlichungstag der Anmeldung: 02.01.1997
(73) Patentinhaber: PHOENIX AKTIENGESELLSCHAFT, 21079 Hamburg (DE)
(72) Erfinder: GRABE, Werner, D-21423 Winsen (DE); GLANG, Siegfried, D-21149 Hamburg (DE); GUTSCHMIDT, Holger, D-21629 Neu Wulmstorf (DE)
(86) Internationale Anmeldenummer: DE9500338
(87) Internationale Veröffentlichungsnummer: WO9525629

(56) Entgegenhaltungen:
- EP-A- 0 182 009
- DE-A- 3 012 387
- DE-A- 3 739 058
- DE-A- 3 906 278
- DE-U- 9 114 138
- FR-A- 2 085 459
- GB-A- 2 240 980
- US-A- 2 721 924
- US-A- 2 903 543
- US-A- 3 186 891
- US-A- 3 400 030
- US-A- 4 929 304
- PATENT ABSTRACTS OF JAPAN vol. 016 no. 331 (M-1282) ,20.Juli 1992 & JP,A,04 094922 (AISIN SEIKI CO LTD) 27.März 1992,

## Beschreibung

Die Erfindung betrifft ein Verfahren zum Verbinden von Profilen aus elastomerem Werkstoff (d.h. Gummi oder gummiähnlichem Kunststoff) zur Herstellung der Ecken von Tunnel-Dichtungsrahmen.

Ausgehend von dem oben kurz umrissenen allgemeinen Stand der Verbindungstechnik von Elastomerprofilen wird nun im folgenden näher auf die Herstellung der Ecken von Tunnel-Dichtungsrahmen eingegangen. Derartige Dichtungsrahmen bestehen zumeist aus vier zusammengesetzten strangförmigen Dichtungsprofilen (DE-C-28 33 345, GB-B-21 70 561, GB-B-21 78 114, GB-B-21 82 987, EP-B-02 55 600, EP-B-03 06 796, EP-B-03 68 174, EP-B-04 14 137, EP-A-04 41 250), wobei jedes Dichtungsprofil in Längsrichtung verlaufende offene und/oder geschlossene Rillennuten, die an der Profilbasisseite angeordnet sind, sowie zusätzlich ebenfalls in Längsrichtung verlaufende Kanäle, die sich zwischen den Rillennuten und der Profilrückenfläche befinden, aufweist; wobei die Herstellung der Dichtungsrahmen beispielsweise nach dem Injektion-Molding-Verfahren erfolgt (GB-B-21 78 114).

Folgende Varianten des Injektion-Molding-Verfahrens sind dabei bekannt:
- Die Kanäle der zugeschnittenen strangförmigen Dichtungsprofile werden auf beiden Seiten (Stirnflächen) gestöpselt.
   Auf diese Weise wird ein Eindringen der Injektionsmasse (Düsmasse) aus vulkanisierbarem Kautschuk in die Profilkanäle verhindert. Mit der Handhabung der Gummi- oder Kunststoff-Stöpsel entstanden technische Schwierigkeiten, verbunden mit einer kostenintensiven Rahmenfertigung.
- In der DE-A-43 01 981 wird eine Vorrichtung beschrieben, bei der die Innenform von der Ecke aus gesehen zu beiden Seiten hin mit zusätzlichen Formeinsätzen als Anschläge für die Dichtungsprofile versehen ist, wobei die Formeinsätze Stege und Stifte aufweisen, wobei wiederum die Stifte in entgegengesetzter Richtung zur Ecke der Innenform verlaufen und während der Herstellung der Rahmenecken an der Profilstirnfläche alle oder wenigstens einen Teil der Kanäle verschließen. Eine weitere Vorrichtungs- bzw. Verfahrensvariante wird in dieser Druckschrift beschrieben.
   Auch wenn die hier vorgestellten Methoden gegenüber dem "Stöpsel-Verfahren" erhebliche technologische Fortschritte brachten, so ist auch hier die Rahmenfertigung nach wie vor zu kostenintensiv.

Aus der DE-A-30 12 387 ist ferner ein Verfahren zum Verbinden der Enden von strang- oder streifenförmigen Gummiartikeln insbesondere von profilierten Dichtungsstreifen miteinander, bekannt; wobei zwischen die Enden zweier vulkanisierter Dichtungsstreifen eine die Stirnflächen der Streifen mit Übermaß überdeckende Scheibe vulkanisierbaren Dichtungswerkstoffes (z.B. Rohlingsfolie) eingelegt und unter Herstellung einer Haftverbindung nach beiden Seiten vulkanisiert wird. Dabei wird u.a. vorgeschlagen, die Scheibe mit einem Halterungsstift, der sich an der Stirnfäche der Vulkanisierform befindet, zu fixieren.

Mit dem erfindungsgemäßen Verfahren wird eine völlig neue Verbindungstechnologie beschritten, die die Herstellung der Ecken von Tunnel-Dichtungsrahmen wesentlich vereinfacht, wobei gemäß Anspruch 1 oder 2 folgende zwei Verfahrensvarianten zur Auswahl stehen:

### Variante A

Die beiden miteinander zu verbindenden Profilenden befinden sich jeweils in einer Haltevorrichtung, umfassend jeweils zwei geteilte profilierte Klammern (Innenklammer, Außenklammer), wobei im geschlossenen Zustand die beiden Haltevorrichtungen die höhengleichen Stirnflächen (d.h. Haftflächen) der präzise zugeschnittenen Profilenden unter Verwendung einer Rohlingsfolie mittels Vulkanisation unter gleichzeitiger Druckeinwirkung infolge des Zusammenfahrens der beiden geschlossenen Haltevorrichtungen miteinander verbunden werden.

### Variante B

Zwischen beiden Profilenden ist ein zusätzliches Profilzwischenstück, insbesondere ein Eckformstück, angeordnet; wobei sich wiederum die beiden Profilenden sowie das Profilzwischenstück bzw. Eckformstück jeweils in einer Haltevorrichtung, umfassend jeweils zwei geteilte profilierte Klammern (Innenklammer, Außenklammer), befinden; wobei im geschlossenen Zustand der drei Haltevorrichtungen die höhengleichen Stirnflächen (d.h. Haftflächen) der präzise zugeschnittenen Profilenden und des Profilzwischenstückes bzw. Eckformstückes unter Verwendung einer Rohlingsfolie mittels Vulkanisation unter gleichzeitiger Druckeinwirkung infolge des Zusammenfahrens der drei geschlossenen Haltevorrichtungen miteinander verbunden werden.

Beide Varianten zeichnen sich jedoch erfindungsgemäß durch iolgenden gemeinsamen Verfahrensablauf aus. So wird die Rohlingsfolie über eine Zuführanordnung unter Schwerkraft in den Spalt zwischen den beiden Profilenden (Variante A) bzw. in die beiden Spalte zwischen Profilende und Profilzwischenstück bzw. Eckformstück (Variante B) eingezogen, wobei beim Zusammenfahren der geschlossenen Haltevorrichtungen die Zuführanordnung zur Seite gefahren wird, und zwar unter gleichzeitiger Trennung der Rohlingsfolie als Verbindungsfolie von der verbleibenden Vorratsfolie.

Zweckmäßigerweise werden nach beiden Varianten die Profilenden und das Profilzwischenstück bzw. Profileckstück in einem Überstand von 1 bis 2 mm eingelegt. und zwar bezogen auf die jeweiligen Haltevorrichtungen.

Die beiden erfindungsgemäßen Verfahrensvarianten werden nun anhand von Ausführungsbeispielen unter Bezugnahme auf schematische Zeichnungen ausführlich erläutert. Es zeigen:
- Fig. 1: eine geschlossene Haltevorrichtung (Querschnittsdarstellung);
- Fig. 2a - 2d: verfahrenstechnischer Ablauf gemäß Variante A;
- Fig. 3a - 3d: verfahrenstechnischer Ablauf gemäß Variante B.

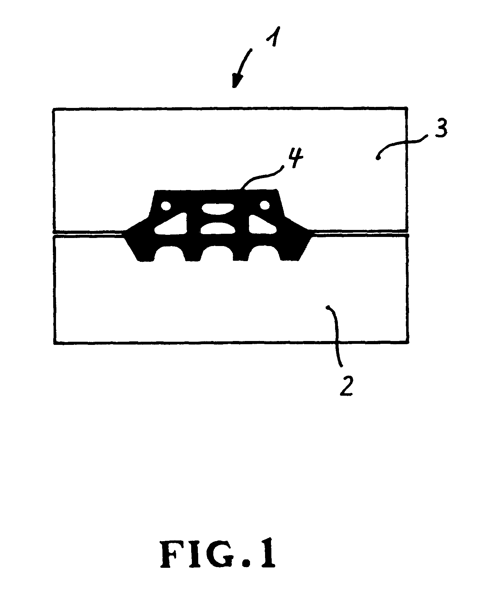

Fig. 1 zeigt eine Haltevorrichtung (1) im geschlossenen Zustand, wobei diese aus zwei geteilten profilierten Klammern besteht, und zwar aus einer Innenklammer (2) und einer Außenklammer (3). Die geschlossene Haltevorrichtung umgreift dabei das Profilende (4), beispielsweise das Ende eines strangförmigen Dichtungsprofiles (EP-A-04 41 250).

Bei der Rahmeneckenherstellung gemäß Variante B besteht die zusätzliche Haltevorrichtung aus zwei geteilten profilierten Eckformklammern, die dann das Eckformstück umgreifen.

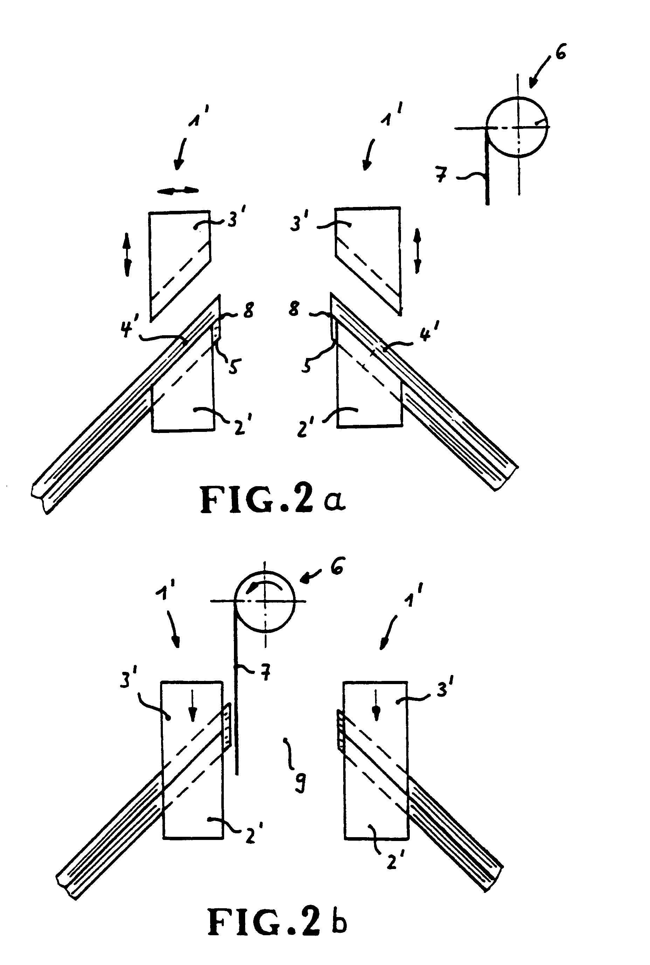

Fig. 2a zeigt die beiden Haltevorrichtungen (1'), wobei die insgesamt vier Klammern (2', 3') geöffnet und auseinander gefahren sind. In die beiden Innenklammern (2') sind die Profilenden (4') eingelegt, und zwar in einem überstand (5) von 1 bis 2 mm - bezogen auf die jeweiligen Haltevorrichtungen (1'). Die Zuführanordnung (6) mit der Rohlingsfolie (7), z.B. Rohgummifolie, ist zur Seite gefahren. Der Bewegungsablauf der Außenklammern (3') ist hier durch Doppelpfeile dargestellt.

Die Stirnflächen (8) der Profilenden (4') sind - bezogen auf die Strangrichtung - jeweils gewinkelt ausgebildet (z.B. 45°) und zudem höhengleich zueinander angeordnet. Wichtig ist dabei der präzise Schnitt. Gegebenenfalls können die Schnitt- bzw. Stirnflächen (8) mechanisch aufgerauht werden.

Nach Fig. 2b sind die beiden Außenklammern (3') auf die jeweiligen Innenklammern (2') zugefahren (Pfeilrichtung), und zwar unter Bildung geschlossener Haltevorrichtungen (1'). Die Zuführanordnung (6) befindet sich nun über dem Spalt (9), wobei die Rohlingsfolie (7) selbst in diesen Spalt unter Schwerkraftbedingungen eingezogen ist.

Nach Fig. 2c werden zur überbrückung des Spaltes (9) - Fig. 2b - die beiden gegenüberstehenden geschlossenen Haltevorrichtungen (1') zusammengefahrern, indem sich eine Haltevorrichtung auf die andere zubewegt (Pfeilrichtung). Unter der Druckwirkung der zusammengefahrenen Haltevorrichtungen (1') wird nun vulkanisiert, wobei die Zuführanordnung (6) wieder zur Seite gefahren ist, und zwar unter gleichzeitiger Trennung der Rohlingsfolie als Verbindungsfolie von der verbleibenden Vorratsfolie (7). Die beiden Profilenden und die Verbindungsfolie werden sehr schnell zusammenvulkanisiert.

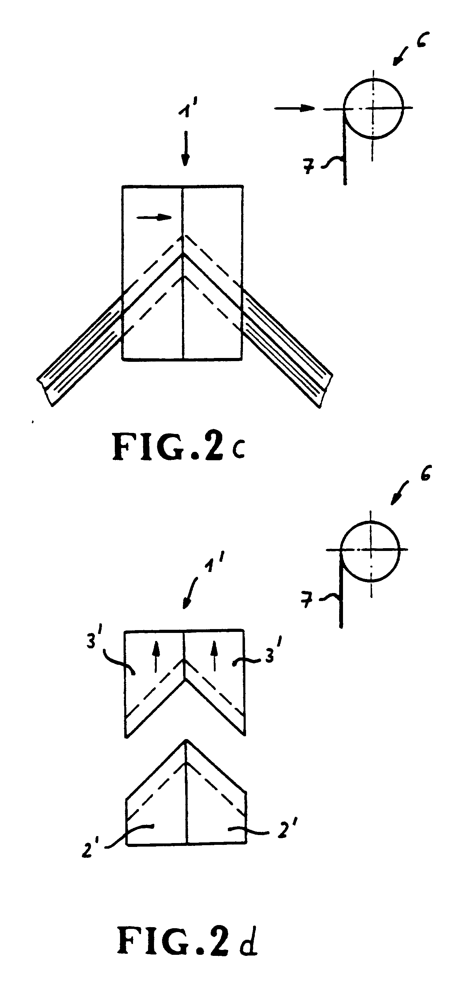

Fig. 2d zeigt das Verfahrensende, wobei die Haltevorrichtungen (1') geöffnet sind, indem sich die Außenklammern (3') wegbewegen (Pfeilrichtung). Die beiden Außenklammern (3') bleiben dabei zusammengefahren. Die miteinander verbundenen Profilenden (hier Rahmenecke) werden entnommen.

Nach dem Auseinanderfahren der Innen- bzw. Außenklammern kann die nächste Rahmeneckenbildung gemäß Variante A erfolgen (Fig. 2a).

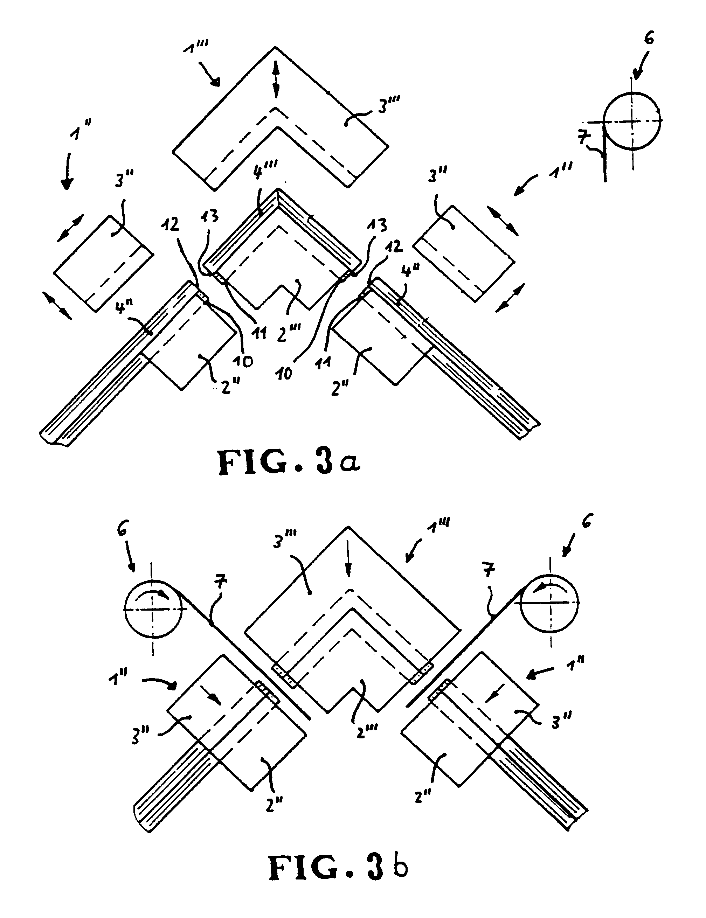

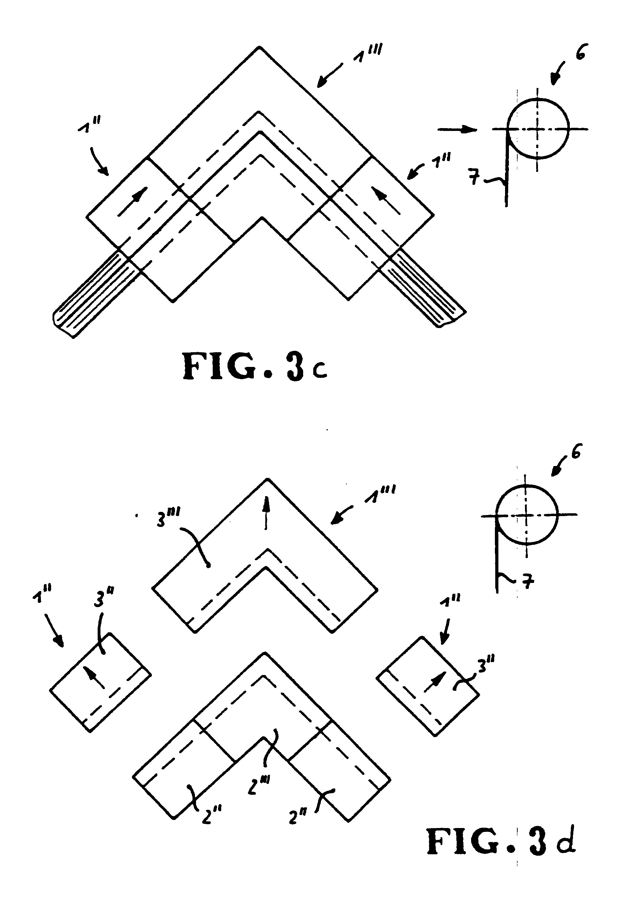

Fig. 3a zeigt die drei Haltevorrichtungen (1", 1"'), wobei die insgesamt sechs Klammern (2", 2"', 3", 3"') geöffnet und auseinander gefahren sind. In die drei Innenklammern (2", 2''') werden die Profilenden (4") eingelegt, und zwar wiederum in einem überstand (10, 11) von 1 bis 2 mm - bezogen auf die jeweiligen Haltevorrichtungen (1", 1"'). Die Zuführanordnung (6) mit der Rohlingsfolie (7) ist zur Seite gefahren. Der Bewegungsablauf der Außenklammern ist auch hier durch Doppelpfeile dargestellt.

Die Stirnflächen (12, 13) der Profilenden (4") bzw. des Eckformstückes (4"') verlaufen hier - bezogen auf die Strangrichtung - jeweils in einem Winkel von 90° und sind zudem höhengleich zueinander angeordnet. Zwecks Vergrößerung der Stirn- bzw. Haftflächen können diese auch gewinkelt verlaufen. Wichtig ist wiederum der präzise Schnitt. Gegebenenfalls können auch hier die Schnitt- bzw. Stoßflächen (12, 13) mechanisch aufgerauht werden.

Nach Fig. 3b sind die drei Außenklammern (3", 3"') auf die jeweiligen Innenklammern (2", 2"') zugefahren (Pfeilrichtung), und zwar unter Bildung geschlossener Haltevorrichtungen (1", 1"'). Die Zuführanordnung (6) befindet sich über dem Spalt (14, 15), wobei die Rohlingsfolie (7) selbst in den jeweiligen Spalt eingezogen ist. Man kann dabei eine einzige Zuführanordnung (6) verwenden (Zweistufenprozeß) oder gleichzeitig zwei Zuführanordnungen einsetzen.

Nach Fig. 3c werden zur Überbrückung der beiden Spalte (14, 15) - Fig 3b - die drei geschlossenen Haltevorrichtungen (1", 1"') zusammengefahren, indem sich die beiden äußeren Haltevorrichtungen (1") auf die mittige Haltevorrichtung (1"') zubewegen (Pfeilrichtung). Unter der Druckwirkung der zusammengefahrenen Haltevorrichtungen (1", 1''') wird nun vulkanisiert, wobei die Zuführanordnung/en (6) wieder zur Seite gefahren ist/sind, und zwar unter gleichzeitiger Trennung der Rohlingsfolie als Verbindungsfolie von der verbleibenden Vorratsfolie (7). Die beiden Profilenden, das Eckformstück und die beiden Verbindungsfolien werden sehr schnell zusammenvulkanisiert.

Fig. 3d zeigt das Verfahrensende, wobei die Haltevorrichtungen (1", 1"') geöffnet sind, indem sich die Außenklammern (3", 3"') wegbewegen (Pfeilrichtung).

Die drei Innenklammern (2", 2"') bleiben dabei zusammengefahren, während die drei Außenklammern (3", 3''') gleichzeitig auseinander fahren. Die Rahmenecke wird nun entnommen.

Nach dem Auseinanderfahren der Innenklammern (2", 2''') kann die nächste Rahmeneckenbildung gemäß Variante B erfolgen (Fig. 3a).

Zwecks Vulkanisation sind die Innenklammern (2, 2', 2", 2"') und Außenklammern (3, 3', 3", 3"') beheizbar. Auch eine UHF-Vulkanisation (US-A-2 721 924) ist möglich, indem die Klammern aus nichtmetallischen Werkstoffen bestehen.

## Patentansprüche

1. Verfahren zum Verbinden von Profilen aus elastomerem Werkstoff, zur Herstellung der Ecken von Tunnel-Dichtungsrahmen, wobei sich die beiden miteinander zu verbindenden Profilenden (4, 4') jeweils in einer Haltevorrichtung (1, 1'), umfassend jeweils zwei geteilte profilierte Klammern, nämlich Innenklammer (2, 2') und Außenklammer (3, 3'), befinden; wobei im geschlossenen Zustand der beiden Haltevorrichtungen die höhengleichen Stirnflächen (8) der präzise zugeschnittenen Profilenden (4, 4') unter Verwendung einer Rohlingsfolie (7) mittels Vulkanisation unter gleichzeitiger Druckeinwirkung infolge des Zusammenfahrens der beiden geschlossenen Haltevorrichtungen (1, 1') miteinander verbunden werden, wobei im einzelnen folgende Verfahrensschritte ablaufen:
- die insgesamt vier Klammern (2, 2', 3, 3') sind geöffnet und auseinander gefahren;
- in die beiden Innenklammern (2, 2') werden die Profilenden (4, 4') eingelegt;
- die beiden Außenklammern (3, 3') fahren auf die jeweiligen Innenklammern (2, 2') zu, und zwar unter Bildung geschlossener Haltevorrichtungen (1, 1');
- zwischen die höhengleichen Stirnflächen (8) der Profilenden (4, 4') wird die Rohlingsfolie (7) mittels einer Zuführanordnung (6) unter Schwerkraft in den noch verbleibenden Spalt (9) eingezogen, wobei beim Zusammenfahren der geschlossenen Haltevorrichtungen (1, 1'), indem sich unter Überbrückung des Spaltes eine Haltevorrichtung auf die andere zubewegt, die Zuführanordnung zur Seite gefahren wird, und zwar unter gleichzeitiger Trennung der Rohlingsfolie als Verbindungsfolie von der verbleibenden Vorratsfolie;
- unter der Druckwirkung der zusammengefahrenen Haltevorrichtungen (1, 1') wird vulkanisiert;
- die Haltevorrichtungen (1, 1') werden geöffnet, indem sich die Außenklammern (3, 3') von den Innenklammern (2, 2') wegbewegen, wobei die beiden Außenklammern und die beiden Innenklammern zusammengefahren bleiben;
- die miteinander verbundenen Profilenden (4, 4') werden entnommen.

2. Verfahren zum Verbinden von Profilen aus elastomerem Werkstoff, zur Herstellung der Ecken von Tunnel-Dichtungsrahmen, wobei zwischen beiden Profilenden (4, 4") ein zusätzliches Profilzwischenstück, insbesondere ein Eckformstück (4"'), angeordnet ist; wobei sich wiederum die beiden Profilenden (4, 4") sowie das Profilzwischenstück bzw. Eckformstück (4"') jeweils in einer Haltevorrichtung (1, 1", 1"'), umfassend jeweils zwei geteilte profilierte Klammern, nämlich Innenklammer (2, 2", 2"') und Außenklammer (3, 3", 3"'), befinden; wobei im geschlossenen Zustand der drei Haltevorrichtungen (1, 1", 1"') die höhengleichen Stirnflächen (12, 13) der präzise zugeschnittenen Profilenden (4, 4") und des Profilzwischenstückes bzw. Eckformstückes (4"') unter Verwendung einer Rohlingsfolie (7) mittels Vulkanisation unter gleichzeitiger Druckeinwirkung infolge des Zusammenfahrens der drei geschlossenen Haltevorrichtungen (1, 1", 1"') miteinander verbunden werden, wobei im einzelnen folgende Verfahrensschritte ablaufen:
- die insgesamt sechs Klammern (2, 2", 2''', 3, 3", 3''') sind geöffnet und auseinander gefahren;
- in die drei Innenklammern (2, 2", 2''') werden die Profilenden (4, 4") sowie das Profilzwischenstuck bzw. Eckformstück (4''') eingelegt;
- die drei Außenklammern (3, 3", 3"') fahren auf die jeweiligen Innenklammern (2, 2", 2"') zu, und zwar unter Bildung geschlossener Halte vorrichtungen (1, 1", 1"');
- zwischen den höhengleichen Stirnflächen (12, 13) der Profilenden (4, 4") und dem Profilzwischenstück bzw. Eckformstück (4''') wird die Rohlingsfolie (7) mittels einer Zuführanordnung (6) unter Schwerkraft in die beiden noch verbleibenden Spalte (14, 15) eingezogen, wobei beim Zusammenfahren der geschlossenen Haltevorrichtungen (1, 1", 1"'), indem sich unter Überbrückung der beiden Spalte die beiden äußeren Haltevorrichtungen (1") auf die mittige Haltevorrichtung (1"') zubewegen, die Zuführanordnung zur Seite gefahren wird, und zwar unter gleichzeitiger Trennung der Rohlingsfolie als Verbindungsfolie von der verbleibenden Vorratsfolie;
- unter Druckeinwirkung der zusammengefahrenen Haltevorrichtungen (1, 1", 1"') wird vulkanisiert;
- die Haltevorrichtungen (1, 1", 1"') werden geöffnet, indem sich die Außenklammern (3, 3", 3"') von den Innenklammern (2, 2", 2"') wegbewegen, wobei die drei Innenklammern zusammengefahren bleiben;
- die miteinander über das Profilzwischenstück bzw. Eckformstück (4''') verbundenen Profilenden (4, 4") werden entnommen.

3. Verfahren nach Anspruch 1 oder 2, **dadurch gekennzeichnet, daß** die Profilenden (4, 4', 4") und das Profilzwischenstück bzw. Profileckstück (4''') in einem Überstand (5, 10, 11) von 1 bis 2mm eingelegt werden, und zwar bezogen auf die jeweiligen Haltevorrichtungen (1, 1', 1", 1"').

## Claims

1. Method for joining profiles made of elastomer material for production of the corners of tunnel sealing frames, in which the two profile ends (4, 4') to be joined together are in each case located in a holding device (1, 1') in each case comprising two divided profiled clamps, namely inner clamps (2, 2') and outer clamps (3, 3'), and when the two holding devices are in the closed state, the end faces (8) of the precisely cut profile ends (4, 4') located at the same height are joined together using a blank sheet (7) by means of vulcanisation under the simultaneous effect of pressure as the two closed holding devices (1, 1') are run together, the following process steps being effected in detail:
- the total of tour clamps (2, 2', 3, 3') are opened and moved away from one another;
- the profile ends (4, 4') are inserted in the two inner clamps (2,2');
- the two outer clamps (3, 3') move up to the respective inner clamps (2, 2') forming closed holding devices (1, 1') ;
- between the end faces (8) of the profile ends (4, 4') located at the same height, the blank sheet (7) is drawn into the remaining gap (9) under gravity by means of a feeding arrangement (6), and when the closed holding devices (1, 1') are moved together in that one holding device is moved towards the other to bridge the gap, the feeding arrangement is moved to the side and at the same time the black sheet as joining sheet is separated tram the remaining supply sheet;
- vulcanisation is carried out under the action of the holding devices (1, 1') moved together;
- the holding devices (1, 1') are opened in that the outer clamps (3, 3') move away tram the inner clamps (2, 2'), the two outer clamps and the two inner clamps remaining together;
- the profile ends (4, 4') joined together are removed.

2. Method for joining profiles made of elastomer material for production of the corners of tunnel sealing frames, in which an additional profile insert, in particular a corner moulding (4"'), is located between the two profile ends (4, 4"), in which again the two profile ends (4, 4") and the profile insert corner moulding (4, 4"') are in each case located in a holding device (1, 1", 1"') in each case comprising two divided profiled clamps, namely inner clamps (2, 2", 2"') and outer clamps (3, 3", 3"'), and when the three holding devices (1, 1", 1"') are in the closed state, the end faces (12, 13) of the precisely cut profile ends (4, 4") and the profile insert or corner moulding (4"') located at the same height are joined together using a blank sheet (7) by means of vulcanisation while simultaneously applying pressure when the three closed holding devices (1, 1", 1"') are run together, the following process steps being effected in detail:
- the total of six clamps (2, 2", 2"', 3, 3", 3"') are opened and moved apart;
- the profile ends (4, 4") and the profile insert or corner moulding (4"') are inserted in the three inner clamps (2,2",2"');
- the three outer clamps (3, 3", 3"') move up to the respective inner clamps (2, 2", 2"'), forming closed holding devices (1, 1", 1"');
- between the end faces (12, 13) of the profile ends (4, 4") and the profile insert or corner moulding (4"') located at the same height, the black sheet (7) is drawn into the two remaining gaps (14, 15) under gravity by means of a feeding arrangement (6), and when the closed holding devices (1, I", 1"') are run together in that the two outer holding devices (I") move towards the middle holding device (1"') to bridge the two gaps, the feeding arrangement is moved to the side and at the same time the blank sheet as joining sheet is separated from the remaining supply sheet;
- vulcanisation is carried out under the action of the pressure of the holding devices (1, I", 1"') run together;
- the holding devices (1, 1", 1'") are opened in that the outer clamps (3, 3", 3"') move away from the inner clamps (2, 2", 2"'), the three inner clamps remaining together;
- the profile ends (4, 4") join together by means of the profile insert or corner moulding (4"') are removed.

3. Method according to claim 1 or 2, **characterised in that** the profile ends (4, 4', 4") and the profile insert or profile corner moulding (4"') are inserted with a protrusion (5, 10, 11) of 1 to 2 mm in relation to the respective holding devices (1, 1', I", 1"').

## Revendications

1. Procédé pour joindre des profilés en matière élastomère, pour la réalisation des coins de cadres d'étanchéité pour tunnels, les deux extrémités (4, 4'), à joindre l'une à l'autre, des profilés se trouvant chacune dans un dispositif de serrage (1, 1'), chaque dispositif de serrage comprenant deux mâchoires profilées séparées, à savoir une mâchoire intérieure (2, 2') et une mâchoire extérieure (3, 3'), les surfaces frontales (8), situées à même hauteur, des extrémités (4, 4'), coupées avec précision, des profilés étant alors, dans l'état fermé des deux dispositifs de serrage, jointes l'une à l'autre par vulcanisation, moyennant l'emploi d'une feuille de matière brute (7), ceci sous l'action simultanée d'une pression consécutive à la mise en contact mutuel des deux dispositifs de serrage (1, 1') fermés, les différentes étapes du procédé se déroulant comme suit:
- les mâchoires (2, 2', 3, 3'), au nombre total de quatre, sont ouvertes et écartées l'une de l'autre;
- les extrémités (4, 4') des profilés sont insérées dans les deux mâchoires intérieures (2 2');
- les deux mâchoires extérieures (3, 3') se referment sur les mâchoires intérieures respectives (2, 2'), en formant ainsi des dispositifs de serrage fermés (1, 1');
- la feuille de matière brute (7) est, au moyen d'un dispositif d'amenée (6), introduite sous l'effet de la pesanteur entre les surfaces frontales (8), situées à même hauteur, des extrémités (4, 4') des profilés, dans l'intervalle (9) qui subsiste encore, le dispositif d'amenée étant déplacé sur le côté lorsque les dispositifs de serrage (1, 1') fermés sont mis en contact mutuel suite au fait qu'un dispositif de serrage est amené contre l'autre en comblant l'intervalle, ceci avec séparation simultanée de la feuille de matière brute, qui sert de feuille de jonction, de la feuille restant en réserve;
- une vulcanisation est réalisée sous l'action de la pression des dispositifs de serrage (1, 1') mis en contact mutuel;
- les dispositifs de serrage (1, 1') sont ouverts par éloignement des pinces extérieures (3, 3') des mâchoires intérieures (2, 2'), les deux mâchoires extérieures et les deux mâchoires intérieures restant alors en contact mutuel;
- les extrémités (4, 4'), jointes l'une à l'autre, des profilés sont retirées.

2. Procédé pour joindre des profilés en matière élastomère, pour la réalisation des coins de cadres d'étanchéité pour tunnels, un tronçon de profilé intercalaire supplémentaire, en particulier un tronçon en forme de coin (4"'), étant disposé entre les deux extrémités (4, 4") des profilés, les deux extrémités (4, 4") des profilés ainsi que le tronçon de profilé intercalaire ou le tronçon en forme de coin (4"') se trouvant alors chacun dans un dispositif de serrage (1, 1", 1"'), chaque dispositif de serrage comprenant deux mâchoires profilées séparées, à savoir une mâchoire intérieure (2, 2", 2"') et une mâchoire extérieure (3, 3", 3"'), les surfaces frontales (12, 13), situées à même hauteur, des extrémités (4, 4"), coupées avec précision, des profilés et du tronçon de profilé intercalaire ou du tronçon en forme de coin (4"') étant, dans l'état fermé des trois dispositifs de retenue (1, 1", 1"'), jointes l'une à l'autre, par vulcanisation, moyennant l'emploi d'une feuille de matière brute (7), ceci sous l'action simultanée d'une pression consécutive à la mise en contact mutuel des trois dispositifs de serrage (1, 1", 1"') fermés, les différentes étapes du procédé se déroulant comme suit:
- les mâchoires (2, 2", 2"', 3, 3", 3"'), au nombre total de six, sont ouvertes et écartées l'une de l'autre;
- les extrémités (4, 4") des profilés ainsi que le tronçon de profilé intercalaire ou le tronçon en forme de coin (4"') sont insérés dans les trois mâchoires intérieures (2, 2", 2"');
- les trois mâchoires extérieures (3, 3", 3"') se referment sur les pinces intérieures respectives (2, 2", 2"'), en formant ainsi des dispositifs de serrage (1, 1", 1"') fermés;
- la feuille de matière brute (7) est, au moyen d'un dispositif d'amenée (6), introduite sous l'effet de la pesanteur entre les surfaces frontales (12, 13), situées à même hauteur, des extrémités (4, 4") des profilés et le tronçon de profilé intercalaire ou le tronçon en forme de coin (4'''), dans les deux intervalles (14, 15) qui subsistent encore, le dispositif d'amenée étant déplacé sur le côté lorsque les dispositifs de serrage (1, 1", 1"') fermés sont mis en contact mutuel suite au fait que les deux dispositifs de serrage extérieurs (1") sont amenés contre le dispositif de serrage central (1"') en comblant les deux intervalles, ceci avec séparation simultanée de la feuille de matière brute, constituant une feuille de jonction, de la feuille restant en réserve;
- une vulcanisation est réalisée sous l'action de pression des dispositifs de serrage (1, 1", 1"') mis en contact mutuel;
- les dispositifs de serrage (1, 1", 1"') sont ouverts par éloignement des mâchoires extérieures (3, 3", 3'") des mâchoires intérieures (2, 2", 2"'), les trois mâchoires intérieures restant alors en contact mutuel;
- les extrémités (4, 4") des profilés, jointes l'une à l'autre par l'intermédiaire du tronçon de profilé intercalaire ou du tronçon en forme de coin (4"'), sont retirées.

3. Procédé selon la revendication 1 ou 2, **caractérisé en ce que** les extrémités (4, 4', 4") des profilés et le tronçon de profilé intercalaire ou le tronçon de profilé en forme de coin (4"') sont insérés avec un dépassement (5, 10, 11) de 1 à 2 mm, par rapport aux dispositifs de serrage respectifs (1, 1', 1", 1'").
